Europäisches Patentamt

European Patent Office

Office européen des brevets

(11) Veröffentlichungsnummer: **0 115 577**
A1

# EUROPÄISCHE PATENTANMELDUNG

(21) Anmeldenummer: 83111129.9

(22) Anmeldetag: 08.11.83

(51) Int. Cl.³: **C 23 C 5/00,** C 23 C 17/00,
B 23 K 1/04, B 23 K 31/02,
B 23 K 35/30, B 23 K 35/32,
B 32 B 15/00, B 32 B 15/04,
C 25 D 3/58, C 25 D 3/64,
C 23 C 7/00

(30) Priorität: 03.02.83 DE 3303568

(71) Anmelder: **Reaktorwartungsdienst und Apparatebau GmbH, Eleonorenstrasse 1, D-5170 Jülich (DE)**

(43) Veröffentlichungstag der Anmeldung: 15.08.84
Patentblatt 84/33

(72) Erfinder: **Schirk, Rolf, Ing. grad.,
Simon-Meister-Strasse 36, D-5000 Köln 60 (DE)**
Erfinder: **Vallentin, Klaus, Eleonorenstrasse 1,
D-5170 Jülich (DE)**

(84) Benannte Vertragsstaaten: **CH DE FR GB IT LI**

(74) Vertreter: **Liermann, Manfred,
Josef-Schregel-Strasse 19, D-5160 Düren (DE)**

(54) **Verfahren zum hitzebeständigen Verbinden von Graphitplatten untereinander oder mit metallischen Untergründen.**

(57) Im Bereich der Reaktortechnik, der Beschleunigertechnik und der Plasmaphysik sowie der Vakuumtechnik ist es wünschenswert, die mit einem Plasma oder beispielsweise mit einem Teilchenstrahl in Berührung kommenden Bauteile mit Graphitplatten gegen das Plasma oder den Teilchenstrahl zu isolieren, um die Reinheit des Plasmas oder des Teilchenstrahls zu erhalten. Es ist jedoch keine befriedigende Verbindungsmöglichkeit der genannten Graphitplatten mit den genannten Bauteilen bekannt. Hier zeigt die Erfindung geeignete Verfahren zur Herstellung der genannten Verbindungen dadurch, daß die für die Verbindung vorgesehene Seite der Platten mit einem Karbidbildner belegt, oder daß auf der genannten Seite galvanisch oder durch Aufdampfen oder Aufspritzen eine hartlötgeeignete Metallschicht aufgebracht wird und daß über Karbidbildner oder Metallschicht ein Hartlot aufgelegt und diese Schichtung gegen die Gegenfläche angelegt und mindestens in der Verbindungszone auf Hartlöttemperatur erhitzt und nachfolgend abgekühlt wird. Eine weitere Möglichkeit zur Herstellung einer solchen Verbindung sieht die Erfindung in der Anwendung eines anorganischen Klebers auf Kieselsäurebasis oder eines Keramikkitts auf Basis Silicium und Aluminiumoxyd als aushärtendes Bindemittel mit ausreichender Wärmebeständigkeit.

0115577

Verfahren zum hitzebeständigen Verbinden von Graphitplatten untereinander oder mit metallischen Untergründen

Die Erfindung betrifft ein Verfahren zum festen und hitzebeständigen Verbinden von Graphitplatten oder überwiegend aus Graphit bestehenden Platten mit ebensolchen Platten oder mit metallischen Untergründen.

Verfahren der vorgenannten Art sind im Stand der Technik unbekannt. Beispielsweise in der Plasmaphysik oder in der Beschleunigertechnik muß das Plasma einerseits bzw. ein Teilchenstrahl andererseits vor Verunreinigungen durch immer unvermeidliche Berührungen mit der jeweils umgebenden Einrichtung geschützt werden. Dies obwohl die genannte Berührung nicht nur unvermeidlich ist, sondern beispielsweise zur Regulierung oder Ausblendung eines Teilchenstrahles in einer Beschleunigeranlage zwingend ist. Zur Vermeidung solcher Verunreinigungen durch Berührung hat sich Kohlenstoff als ideal erwiesen. Es sind jedoch nicht nur Verunreinigungen zu vermeiden, sondern es muß gleichzeitig eine hohe Wärmeenergie aufgenommen werden, sowie Aktivierung des Werkstoffes, der beispielsweise mit einem Teilchenstrahl in Berührung kommt, möglichst vermieden werden. All dies erreichen die bisherigen Werkstoffe nicht, so daß man die entsprechenden Nachteile hinnehmen muß. Es ist allerdings bekannt, daß beispielsweise Kohlenstoff, aus dem ja Graphitplatten bestehen, nicht aktiviert wird. Eine Beschichtung mit Kohlenstoff, beispielsweise in Form von Graphitplatten, ist daher wünschenswert, aber nach dem bisherigen Stand der Technik nicht möglich.

Der Erfindung liegt damit die Aufgabe zugrunde, ein Verfahren der eingangs beschriebenen Art vorzuschlagen, mit welchem es gelingt, gepreßten Kohlenstoff, beispielsweise in Form von Graphitplatten, mit anderen solchen Kohlenstoffplatten oder mit den entsprechenden Wandungen der verwendeten Geräte fest und hitzebeständig zu verbinden.

Erfindungsgemäß ist diese Aufgabe dadurch gelöst, daß die für die Verbindung vorgesehene Seite der Platten mit einem Karbidbildner und darüber mit einem Hartlot belegt und und in dieser Schichtung gegen die Gegenfläche angelegt und mindestens in der Verbindungszone auf Hartlöttemperatur erhitzt und nachfolgend abgekühlt wird. Kohlenstoff, und damit auch Graphitplatten, sind an sich nicht hartlötbar. Andererseits wäre aber eine Hartlotverbindung sowohl ausreichend fest als auch ausreichend hitzebeständig. Die Hart lotverbindung selbst wäre sogar noch fester als die Graphitplatte. Durch das Belegen der Graphitplatte mit einem Karbidbildner bilden sich auf der Graphitplatte fest mit dem Graphit verankerte Karbide, die ihrerseits aber hartlötfähig sind. Belegt man diese Karbide also mit einem Hartlot, so kann nunmehr die Graphitplatte mit einer entsprechend vorbereiteten zweiten Graphitplatte oder mit einer metallischen Gegenfläche durch einfaches Erhitzen des Lötbereiches auf Hartlöttemperatur und nachfolgender Abkühlung hartgelötet werden. Damit ist es zum ersten Mal gelungen, Graphitplatten durch eine Hartlötverbindung mit anderen Graphitplatten oder mit metallischen Bauteilen zu verbinden.

Nach einer Ausgestaltung der Erfindung ist vorgesehen, daß als Karbidbildner Titan oder Molybdän und als Hartlot ein reines Silber-Kupfer-Lot verwendet wird. Die Karbidbildner Titan und Molybdän haben sich als besonders wirksam erwiesen, wobei die Anwendung von einem reinen Silber-Kupfer-Lot als Hartlot gleichzeitig eine vakuumgeeignete Verbindung schafft.

Eine alternative Möglichkeit zur Lösung der gestellten Aufgabe wird nach der Erfindung darin gesehen, daß auf die für die Verbindung vorgesehene Seite der Platten eine ausreichend dicke Schicht hartlötgeeignetes Metall galvanisch aufgebracht und diese Metallschicht mittels bekannter Hartlötung oder Hartlötung nach der ersten Lösungsalternative mit der Gegenfläche verbunden wird. Es ist problemlos möglich Kohlenstoff und damit auch Graphitplatten auf galvanischem Wege mit einer Metallschicht zu versehen, die eine genügend feste Verbindung mit dem Kohlenstoff der Graphitplatte aufweist. Ist diese Metallschicht erst vorhanden, so kann in diesem Bereich die Graphitplatte wie eine Metallplatte behandelt werden und folglich auch hartgelötet werden. Es kann dann auf diesem Wege die notwendige Verbindung beispielsweise mit einem metallischen Untergrund durch Hartlöten hergestellt werden. Ebenso ist es natürlich möglich, anstelle des metallischen Untergrundes eine zweite Graphitplatte aufzusetzen. Diese kann ebenfalls auf galvanischem Wege mit einer Metallschicht versehen sein. Ebenso aber kann bei der zweiten Platte mit einem Karbidbildner die für die Verbindung vorgesehene Seite der Graphitplatte vorbereitet sein für die nachfolgende Hartlötung.

In einer Ausgestaltung der genannten Alternative ist nach der Erfindung noch vorgesehen, daß die Metallschicht durch Aufdampfen oder Aufspritzen aufgebracht wird. Auch diese an sich bekannten Technologien, die jedoch in Zusammenhang mit Kohlenstoff noch nicht angewendet wurden, sind geeignet, eine mit dem Kohlenstoff des Graphits genügend fest vernetzte Metallschicht gewünschter Dicke auf die Graphitplatte aufzubringen, so daß hierdurch ebenfalls wieder die Voraussetzungen für eine nachfolgende Hartlötung geschaffen sind. Eine ergänzende Ausgestaltung der Erfindung sieht vor, daß die Metallschicht während des Hartlötens in dem für die Hartlötung nicht entscheidenden Bereich ausreichend gekühlt wird. Hierdurch kann auf einfache Art und Weise eine Beeinträchtigung der Verbindung zwischen Metallschicht und Graphitplatte durch die bei der Hartlötung erforderliche Erwärmung verhindert werden.

Eine weitere Lösung der gestellten Aufgabe sieht die Erfindung darin, daß auf mindestens eine der für die Verbindung vorgesehenen Seiten als Bindemittel ein anorganischer Kleber auf Kieselsäurebasis oder ein Keramikkitt auf Basis Silicium und Aluminiumoxyd aufgetragen und danach die Flächen mit dem Bindemittel gegeneinander gelegt werden und das Bindemittel in geeigneter Weise ausgehärtet wird. Die Hitzebeständigkeit der genannten Bindemittel ist bekannt. Jedoch sind die genannten Bindemittel noch nicht als Bindemittel für den beschriebenen Einsatzfall verwendet worden. Obwohl an sich Klebeverbindungen zwischen Metallteilen oder anderen Werkstoffkombinationen in der Technik bekannt sind, so hat man dennoch solche Klebeverbindungen bisher in den hochbelasteten Bereichen der Beschleunigertechnik, der Plasmaphysik, der Vakuumtechnik oder der Hochenergiephysik nicht durchgeführt. Insbesondere wurden Graphit-Graphitverbindungen oder Graphit-Metallverbindungen bisher nicht mittels der genannten Kleber vorgenommen. Gleichwohl hat sich erwiesen, daß eine solche Verbindung auch in den beschriebenen Einsatzfällen ausreichend fest und hitzebeständig ist.

Ein typischer Einsatzfall der Erfindung liegt im Bereich der Beschleunigertechnik. Dort werden Teilchen auf hohe Energie beschleunigt, so daß ein Teilchenstrahl vorhanden ist. Dieser Teilchenstrahl soll geführt oder z.B. ausgeblendet (begrenzt) werden. Es soll auch möglich sein, den Teilchenstrahl ganz zu stoppen.

In den Bereichen des Beschleunigers, in denen der Strahl beispielsweise mit den Wandungen in Berührung kommt, wird diese Wandung örtlich eng begrenzt hoch erhitzt. Um Schäden des Beschleunigers zu vermeiden, ist der Innenwandbereich des Beschleunigers, der mit dem Teilchenstrahl in Berührung kommen kann, auf einen diesen beispielsweise außen umgebenden Kühlkörper aufgebracht, so daß die örtlich entstehende hohe thermische Belastung von dem Kühlköper aufgefangen werden kann. Dennoch wird durch die von dem Teilchenstrahl getroffene Materie der Teilchenstrahl selbst verunreinigt und das getroffene Material wird aktiviert (instabil). Die nicht zu vermeidende Aktivierung des Materials hat gefährliche Sekundärstrahlung zur Folge, die durch entsprechende Schutzmaßnahmen aufgefangen werden muß. Außerdem stellt diese Sekundärstrahlung eine Störstrahlung dar, die in bestimmten Fällen die notwendigen Messungen unerwünscht beeinflußt.

Die thermische Belastung der Materie durch den auftreffenden Teilchenstrahl führt trotz Kühlung zu unerwünscht rascher Zerstörung dieser Materie.

Die Verunreinigung des Strahls durch die getroffene Materie beeinflußt ebenfalls in unerwünschter Weise die Messungen.

Darüber hinaus wird durch die sehr begrenzte thermische Belastbarkeit des Materials in dem beispielsweise der Teilchenstrahl geführt, ausgeblendet oder gestoppt werden soll, erzwungen, daß der Energiebereich, in dem der Beschleuniger arbeiten kann, relativ begrenzt ist. Hier ist natürlich von besonderer Wichtigkeit eine direkte oder indirekte Kühlmöglichkeit der mit dem Teilchenstrahl in Berührung kommenden Materie bezw. Bauteile. Die Verbindung dieser Bauteile mit dem Kühlkörper muß daher so sein, daß ein möglichst guter Wärmeübergang gewährleistet ist.

Kohlenstoff beispielsweise in Form von Graphitplatten, hat die angenehme Eigenschaft, daß es einen Teilchenstrahl nur außerordentlich gering verunreinigt und durch einen auftreffenden Teilchenstrahl nicht aktiviert wird. Kohlenstoff hat darüber hinaus auch sehr gute Wärmeleiteigenschaften und einen für die genannten Anwendungsfälle guten Schmelzpunkt. Die Verwendung von Kohlenstoff, beispielsweise in Form von Graphitplatten, zur Führung, Ausblendung oder zum Stoppen beispielsweise eines Teilchenstrahls, wäre daher an sich wünschenswert. Es gibt jedoch im Stand der Technik keine wärmetechnisch günstige Verbindungsmöglichkeit dieses Kohlenstoffs zu einem Kühlkörper. Die in den Schutzansprüchen beschriebenen Verfahren schaffen erstmals eine solche wärmetechnisch günstige Verbindung von Kohlenstoff, beispielsweise in Form von Graphitplatten, zu einem Kühlkörper und machen so die Anwendung von Kohlenstoff in den genannten Bereichen der Technik erstmals möglich.

0115577

*Schutzansprüche*

*1. Verfahren zum festen und hitzebeständigen Verbinden von Graphitplatten oder überwiegend aus Graphit bestehenden Platten mit ebensolchen Platten oder mit metallischen Untergründen, dadurch gekennzeichnet, daß die für die Verbindung vorgesehene Seite der Platten mit einem Karbidbildner und darüber mit einem Hartlot belegt und in dieser Schichtung gegen die Gegenfläche angelegt und mindestens in der Verbindungszone auf Hartlöttemperatur erhitzt und nachfolgend abgekühlt wird.*

*2. Verfahren nach Anspruch 1., dadurch gekennzeichnet, daß als Karbidbildner Titan oder Molybdän und als Hartlot ein reines Silber-Kupfer-Lot verwendet wird.*

*3. Verfahren zum festen und hitzebeständigen Verbinden von Graphitplatten oder überwiegend aus Graphitplatten bestehenden Platten mit ebensolchen Platten oder mit metallischen Untergründen, dadurch gekennzeichnet, daß auf die für die Verbindung vorgesehene Seite der Platten eine ausreichend dicke Schicht hartlötgeeignetes Metall galvanisch aufgebracht und diese Metallschicht mittels bekannter Hartlötung oder mittels Hartlötung nach Anspruch 1. oder 2. mit der Gegenfläche verbunden wird.*

*4. Verfahren nach Anspruch 3, dadurch gekennzeichnet, daß die Metallschicht durch Aufdampfen oder Aufspritzen aufgebracht wird.*

*5. Verfahren nach Anspruch 3. oder 4., dadurch gekennzeichnet, daß die Metallschicht während des Hartlötens in dem für die Hartlötung nicht entscheidenden Bereich ausreichend*

*gekühlt wird.*

6.    *Verfahren zum festen und hitzebeständigen Verbinden von Graphitplatten oder überwiegend aus Graphit bestehenden Platten mit ebensolchen Platten oder mit metallischen Untergründen, dadurch gekennzeichnet, daß auf mindestens eine der für die Verbindung vorgesehenen Seiten als Bindemittel ein anorganischer Kleber auf Kieselsäurebasis oder ein Keramikkitt auf Basis Silicium und Aluminiumoxyd aufgetragen und danach die Flächen mit dem Bindemittel gegeneinander gelegt werden und das Bindemittel in geeigneter Weise ausgehärtet wird.*

## EINSCHLÄGIGE DOKUMENTE

EP 83111129.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE - A1 - 3 115 494 (LICENTIA PATENT-VERWALTUNGS-GMBH) <br><br> * Ansprüche * <br><br> -- | 1-3 | C 23 C 5/00 <br> C 23 C 17/00 <br> B 23 K 1/04 <br> B 23 K 31/02 |
| Y | DE - B2 - 2 716 975 (VACUUM SOLDEER CENTRUM V.O.F.) <br><br> * Spalte 1, Zeile 64 - Spalte 2, Zeile 5; Ansprüche * <br><br> -- | 1,2,5 | B 23 K 35/30 <br> B 23 K 35/32 <br> B 32 B 15/00 <br> B 32 B 15/04 |
| Y | DE - C2 - 2 534 777 (INSTITUT PROBLEM MATERIALOVEDENIJA AKA-DEMII NAUK UKRAINSKOJ SSR) <br><br> * Ansprüche * <br><br> -- | 1,2,5 | C 25 D 3/58 <br> C 25 D 3/64 <br> C 23 C 7/00 <br> C 23 C 13/02 |
| Y | DD - A - 140 849 (M. GERTIG, V. GROSSER, K. WITTKE, K. RENNER) <br><br> * Ansprüche * <br><br> -- | 1,2 | |
| Y | US - A - 4 358 506 (J. INTRATER et al.) <br><br> * Zusammenfassung; Ansprüche * <br><br> -- | 1,2 | RECHERCHIERTE SACHGEBIETE (Int. Cl. ³) <br><br> C 23 C <br> B 23 K <br> B 32 B |
| Y | US - A - 3 981 427 (R.R. BROOKES) <br><br> * Fig. 4-7; Ansprüche * <br><br> -- | 1,5 | |

Der vorliegende Recherchenbericht wurde für alle Patentansprüche erstellt.

| Recherchenort | Abschlußdatum der Recherche | Prüfer |
|---|---|---|
| WIEN | 20-03-1984 | SLAMA |

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| Y | US - A - 3 901 663 (H. HOFMANN et al.) <br> * Ansprüche * <br> -- | 1 |
| Y | GB - A - 1 051 393 (BALZERS PATENT- UND LIZENZ-ANSTALT) <br> * Ansprüche * <br> -- | 1,4 |
| Y | GB - A - 698 173 (M. LITTMANN, METRO-CUTANIT LIMITED) <br> * Ansprüche * <br> ---- | 1-4 |

**KLASSIFIKATION DER ANMELDUNG (Int. Cl.³)**

**RECHERCHIERTE SACHGEBIETE (Int. Cl.³)**